# EUROPÄISCHE PATENTANMELDUNG

(11) **EP 0 692 685 A2**
(43) Veröffentlichungstag der Anmeldung: **17.01.1996**
(21) Anmeldenummer: 95101763.1
(22) Anmeldetag: 10.02.1995
(51) Int. Cl.: F24J 2/04, E04B 1/80, B29C 47/00

(54) **Hohlkörper aus extrudierbarem Kunststoff zur Verwendung als transparentes Wärmedämmelement in Gebäudefassaden, sowie ein Werkzeug zu dessen Herstellung**

(30) Priorität: 13.07.1994 DE 9411280 U
(71) Anmelder: Röhm GmbH, D-64293 Darmstadt (DE)
(72) Erfinder: Meier-Kaiser, Dr. Michael, D-64319 Pfungstadt (DE); Benz, Dr. Volker, D-64739 Höchst (DE); Müller, Dr. Michael, D-64625 Bensheim (DE)

(57) **Zusammenfassung**

Die Erfindung beschreibt einen einfach herstellbaren Hohlkörper (53) aus transparentem, extrudierbarem Kunststoff, dessen Hohlkammern eine längliche Geometrie aufweisen und der Bestandteil einer Gebäudefassade (55) ist. So eingebaut, daß die Hohlkammern waagerecht verlaufen, dient der Hohlkörper als transparentes Wärmedämmelement. Zur Herstellung der noch unverschlossenen Hauptkomponente des Hohlkörpers wird ein speziell ausgeführtes Extrusionswerkzeug benötigt, das ebenfalls Gegenstand der Erfindung ist.

## Beschreibung

Die Erfindung liegt im Gebiet der Energieeinsparung bei der Beheizung von Gebäuden. Sie betrifft transparente, geschlossene Hohlkörper aus extrudierbarem Kunststoff, die im wesentlichen als geschlossene Stegplatten ausgebildet sind und deren Hohlkammern geometrisch so gestaltet sind, daß sie sich, als Elemente von Gebäudefassaden verwendet, zur Wärmedämmung und Wärmespeicherung eignen. Eine spezielles Extrusionswerkzeug zur Herstellung der unverschlossenen Stegplatte als Hauptkomponente des erfindungsgemäßen Hohlkörpers ist ebenfalls Bestandteil der Erfindung.

Bekannt sind Röhrchenbündel aus transparentem Kunstoff zur Außenverkleidung von Gebäuden, insbesondere Energiesparhäusern (GEO Heft 3, 1993, Gruner und Jahr, Hamburg S. 96 - 100, "Zeit für neues Wohnen"). Diese senkrecht zur Hauswand ausgerichteten und außen mit einer transparenten Platte abgedeckten Röhrchenbündel leiten das Sonnenlicht nach dem Prinzip des Lichtwellenleiters zu einer dahinter liegenden schwarzen Absorberschicht und wandeln es so teilweise in Wärmeenergie um. Die Wärmeenergie kann von der dahinterliegenden Hausmauer aufgenommen werden. Bei besonders intensiver Sonneneinstrahlung im Sommer können die Röhrchenbündel mit einer zwischen Abdeckscheibe und den Röhrchen verlaufenden Jalousie abgeschattet werden, um eine übermäßige Aufheizung zu vermeiden. Die Kosten für das beschriebene System sind relativ hoch; dies unter anderem deshalb, weil die Herstellung der Röhrchenbündel sehr aufwendig ist.

Die deutsche Offenlegungsschrift DE 30 11 905 beschreibt Fensterscheiben aus coextrudiertem Kunststoffmaterial, die zwischen zwei transparenten Platten sowohl lichtdurchlässige als auch lichtreflektierende Rippen aufweisen, wodurch Hohlkammern gebildet werden. In den Hohlkammern befindet sich ruhende Luft, die eine Wärmeübertragung durch die Fensterscheibe verzögert. Die lichtdurchlässigen Rippen haben die Aufgabe, die Sonnenstrahlung vor allem in den Wintermonaten durchzulassen. Die lichtundurchlässigen Rippen dienen der Reflexion der Sonnenstrahlung, wodurch vor allem in den Sommermonaten eine unerwünschte Aufheizung des Gebäudes vermieden werden soll. Die mögliche Geometrie der Hohlkammern wird in zahlreichen Figuren gezeigt. Die Abmessungen werden nicht weiter spezifiziert. Der Nachteil des Systems liegt in der komplizierten Anordnung der lichtdurchlässigen und der lichtundurchlässigen Rippen, so daß die Herstellung der Fensterscheiben außerordentlich aufwendige und damit kostenintensive Extrusionsverfahren erfordern würde.

Es wurde daher als Aufgabe angesehen, eine als Bestandteil von Gebäudefassaden verwendbare transparente Wärmedämmung zu entwickeln, die vor allem einfacher herstellbar ist als die beschriebenen Systeme.

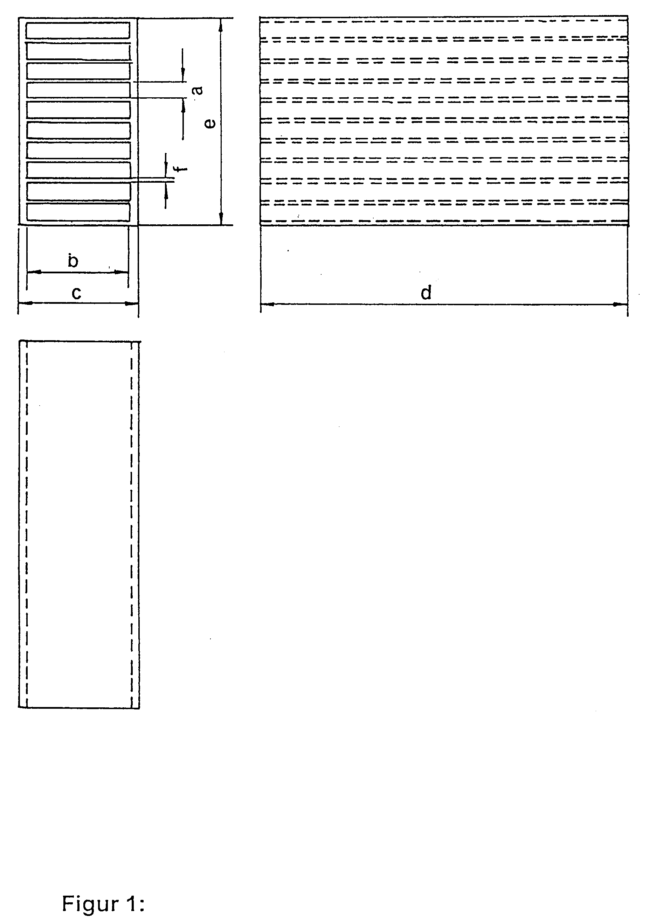

Die Aufgabe wurde erfindungsgemäß gelöst durch einen transparenten, wärmedämmenden, geschlossenen Hohlkörper aus extrudierbarem Kunststoff als Bestandteil einer Gebäudefassade, enthaltend mindestens zwei parallel zueinander stehende Platten, die durch parallel zueinander, zwischen den Platten angeordnete Stege miteinander verbunden sind, wodurch Hohlkammern gebildet werden, dadurch gekennzeichnet, daß die Stege an der Gebäudefassade waagerecht verlaufen und daß die Ausdehnung der Hohlkammern in senkrechter Richtung (a) höchstens ein Viertel der Ausdehnung in der Breite (b) beträgt (Figur 1).

Der Vorteil der Erfindung gegenüber dem Stand der Technik liegt darin, daß die Hauptkomponente, der noch unverschlossene Hohlkörper, auf sehr rationelle Weise in einem Stück extrudiert werden kann. Anders als bei den angeführten Röhrchenbündeln kann die Hauptkomponente in der wesentlich längeren Ausdehnungsrichtung der späteren Anbringungsorientierung längs zur Hauswand extrudiert werden. Da der Hohlkörper nicht als Fenster vorgesehen ist, sind lichtreflektierende Stege oder Rippen in dessen Innern, die einen hohen Fertigungsaufwand bedingen und zugleich die Transparenz stark erniedrigen würden, von vornherein nicht notwendig.

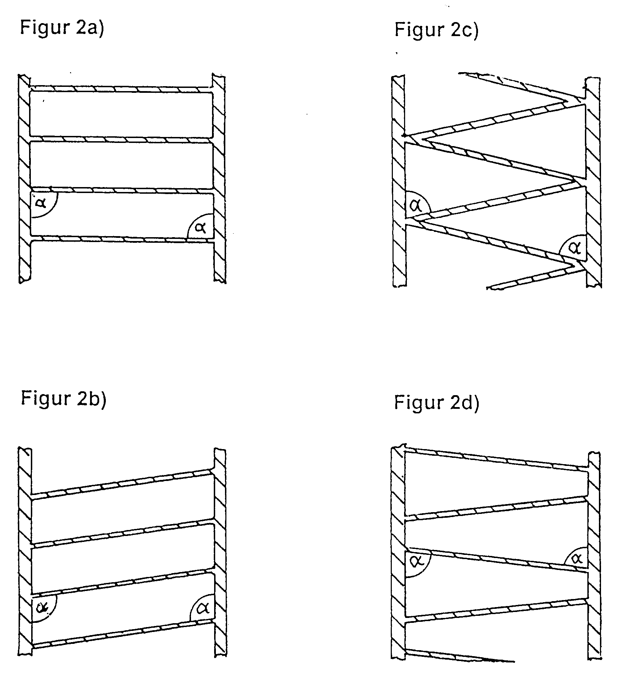

Die Erfindung wird durch die **Figuren 1 bis 6** erläutert, ist aber nicht auf die dargestellten Ausführungsformen beschränkt.
**Figur 1**: Ansicht eines erfindungsgemäßen Hohlkörpers
**Figuren 2a bis 2d**: Verschiedene Beispiele für geometrische Gestaltungen der Hohlkammern im Querschnitt
   **2a**: Rechteckiger Hohlkammerquerschnitt
   **2b**: Parallelogrammartiger Hohlkammerquerschnitt
   **2c**: Dreieckiger Hohlkammerquerschnitt
   **2d**: Trapezförmiger Hohlkammerquerschnitt
**Figur 3a bzw. b**: Stegplatten-Extrusionswerkzeug im Querschnitt
**Figur 4**: Stegplatten-Extrusionswerkzeug in der Ansicht von vorn
**Figur 5**: Seitenansicht eines mit Abstandhaltern an der Gebäudefassade angebrachten erfindungsgemäßen Hohlkörpers
**Figur 6**: Ein an der Gebäudefassade angebrachter, mit Hilfe einer Jalousie abgeschatteter erfindungsgemäßer Hohlkörper
Die Erfindung läßt zahlreiche Ausführungsformen zu, die bei der transparenten Wärmedämmung von Gebäuden und zugleich als architektonische Gestaltungsmittel eingesetzt werden können. Es lassen sich mannigfache Fassadenkonstruktion, wie z.B die Anordnung der Hohlkörper im Fachwerkrastern, Bändern, Streifen oder sonstigen geometrischen Figuren in Gebäudefassaden erdenken.

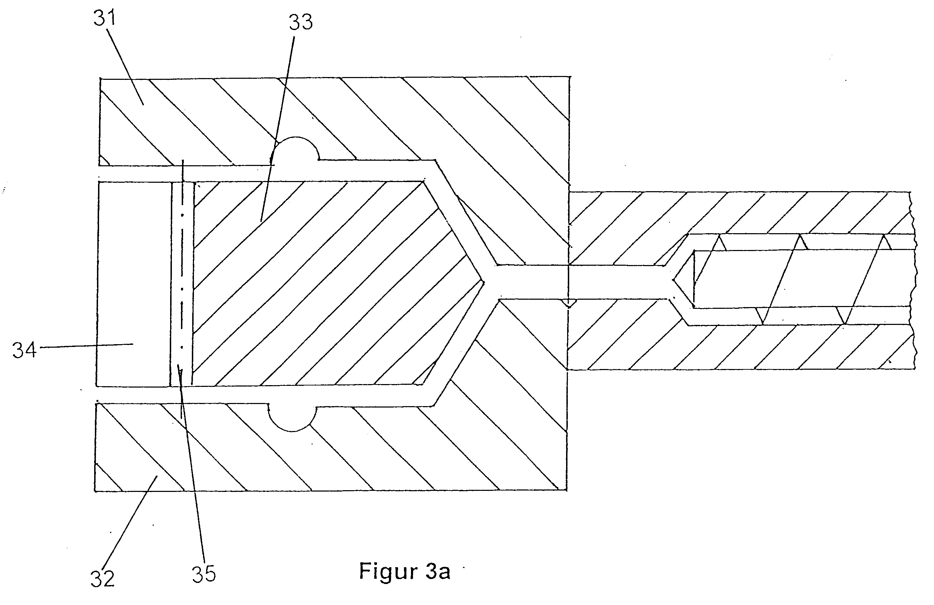

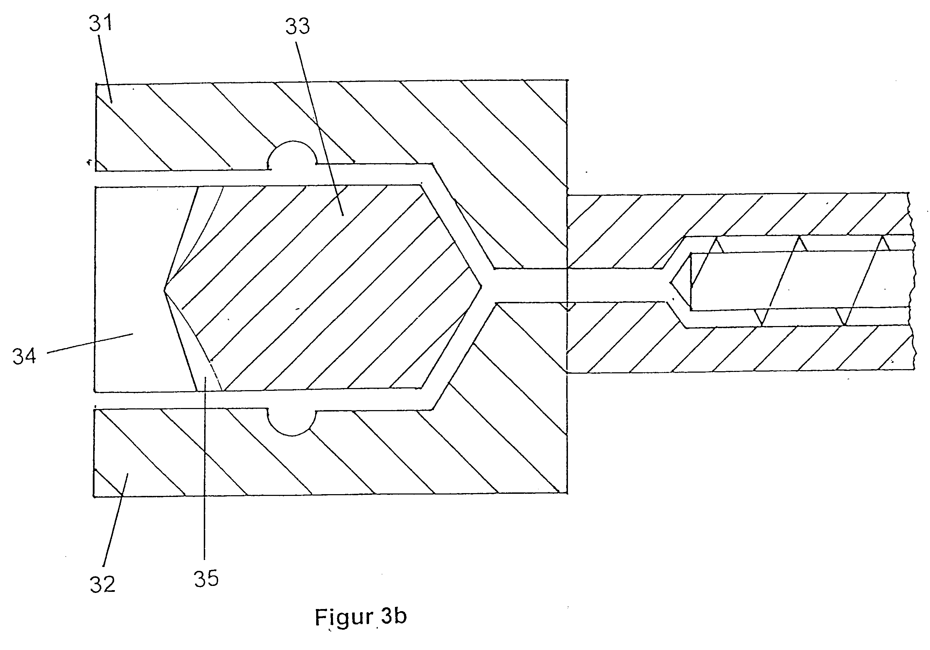

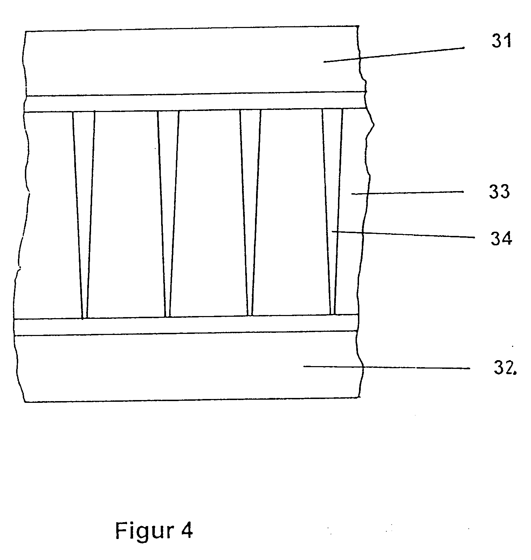

Die Erfindung kann wie folgt ausgeführt werden:
Ein erfindungsgemäßer Hohlkörper wird aus mehreren Teilen gefertigt. Zunächst wird seine Hauptkomponente, die noch unverschlossene Stegplatte in einem Stück aus Kunststoff extrudiert, wobei der Extruder mit dem erfindungsgemäßen Extrusionswerkzeug ausgestattet ist.
Dieses Extrusionswerkzeug (Figur 3a, 3b und Figur 4) weist zwischen den Lippen (31, 32) ein Kernstück (33) mit Schlitzen (34) auf, die zur Extrusion der Stege dienen. Aufgrund der Dicke (c, Figur 1) des zu extrudierenden Hohlkörpers sind an der Basis der Schlitze besondere Massekanäle (35) vorhanden, um die Speisung der Stege zu gewährleisten. In einer besonderen Ausführungsform (Figur 3b) verjüngen sich diese Massekanäle nach innen hin zunehmend. Dabei werden der Winkel zwischen der Mittellinie des Massekanals und der Extrusionsrichtung und der Querschnittsverlauf des Massekanals nach denselben Regeln festgelegt, nach denen auch die Kontur der Verteilerkanäle von Breitschlitzverteilern bestimmt wird. Wegen der erheblichen Länge (b, Figur 1) der Stege besteht die Gefahr, daß unmittelbar nach dem Verlassen der Extrusionsdüse die Formmasse etwas nach unten fließt. Um diese Erscheinung auszugleichen, ist es zweckmäßig die Schlitze (34) zur Ausbildung der Stege oben etwas breiter auszuführen als unten (Figur 4).

Als Kunststoffe kommen dabei solche Stoffe in Betracht, die im polymerisierten Zustand transparent, ausreichend witterungs- und hitzebeständig sind, eine ausreichende Festigkeit aufweisen und thermoplastisch verarbeitbar sind. Beispiele dafür sind Polycarbonat, Polymethylmethacrylat, Polystyrol oder Polyvinylchlorid.

Die extrudierte noch unverschlossene Stegplatte wird in der gewünschten Länge (Figur 1, d) abgeschnitten. Sinnvolle Längen liegen zwischen 500mm bis 3000 mm. Längere Elemente sind nicht sinnvoll, da beim Einsatz an der Gebäudefassade unter Sonneneinstrahlung die Gefahr einer ungleichmäßigen Erwärmung besteht, die infolge thermischer Dehnung zu erheblichen Spannungen und schließlich zu Spannungrissen führen kann. Wesentlich kürzere Elemente würden wiederum die Herstellung und die Montage verteuern.

Die Geometrie der Hohlkammern wurde bei der Extrusion so gestaltet, daß die Ausdehnung in senkrechter Richtung (Figur 1, a) höchstens ein Viertel der Ausdehnung in waagerechter Richtung (Figur 1, b) beträgt. Dies ist notwendig, um eine freie Wärmekonvektion in den später verschlossenen Hohlkammern zu unterdrücken. Größere Verhältnisse von b: a begünstigen die Unterdrückung der freien Wärmekonvektion und erhöhen die Wärmedämmungsfähigkeit. Sinnvolle Werte für das Verhältnis b: a liegen zwischen 5 und 200, vorzugsweise zwischen 10 und 60.

Weiterhin kann die Geometrie der Hohlkammerquerschnitte je nach gewünschter Wärmedämmleistung, Wärmespeicherungskapazität und den Einbauverhältnissen in der Gebäudefassade verschieden gewählt werden. Ein parallelogrammförmiger Querschnitt ist zur Unterdrückung der freien Wärmekonvektion in den Hohlkammern von Vorteil, wenn sich die höhere Spitze des Parallelogramms auf der heißeren Wandseite befindet, so daß die erhitzte Luft im oberen Winkel verharrt. Dreieckige oder trapezförmige Hohlkammerquerschnitte sind ebenfalls denkbar. Auch können in einer Gebäudefassade Hohlkörper mit unterschiedlichen Hohlkammerquerschnitten angebracht sein, um die unterschiedlichen tages- und jahreszeitlichen Sonneneinstrahlungswinkel zu berücksichtigen.

Um ein bauchiges Durchhängen der Stege während der Extrusion zu vermeiden, sollen die Stege möglichst in senkrechter Richtung extrudiert werden. Bei einem parallelogrammförmigen Hohlkammerquerschnitt wäre das Extrusionswerkzeug demnach entsprechend schräg zu justieren.

Die Gesamttiefe des Hohlkörpers (Figur 1, c) wird je nach gewünschter Wärmedämmungsleistung bzw. gewünschter Wärmespeicherungskapazität und den Einbauverhältnissen an der Gebäudefassade sinnvoll zwischen 50 und 500 mm, bevorzugt zwischen 100 und 300 mm, gewählt.

Zur Vermeidung einer unter ungünstigen Umständen auftretenden, transmissionsstörenden Tropfenbildung durch Kondenswasser ist es vorteilhaft, die Innenwände der Hohlkammern - z.B. durch ein Tauchbeschichtungsverfahren - mit einem wasserspreitenden Überzug zu versehen. Geeignet sind z.B. Überzüge gemäß der europäischen Patentschrift EP 0 149 182.

Die offenen Stirnseiten der Stegplatte können direkt durch Verkleben mit Kunststoff-, Metallstreifen oder auch Glasplatten verschlossen werden. Um Spannungen zu vermeiden, erscheint eine Verklebung mit dem gleichen Kunststoffmaterial günstig.

Denkbar ist auch, daß der Hohlkörper beim Einbau in die Gebäudefassade mittels dort angebrachter Dichtungselemente, die z.B. Gummi- oder Kunststoffquetschdichtungen aufweisen, verschlossen wird.
Der Einbau in die Gebäudefassade muß so erfolgen, daß die Stege in Längsrichtung (Figur 1, d) etwa waagerecht angeordnet sind. Dies ist notwendig, da es bei schrägem Einbau zu einer freien Wärmekonvektion durch die in den Hohlkammern in Längsrichtung aufsteigende und fallende Luft käme, wodurch sich der Wärmedämmeffekt deutlich verringern würde.

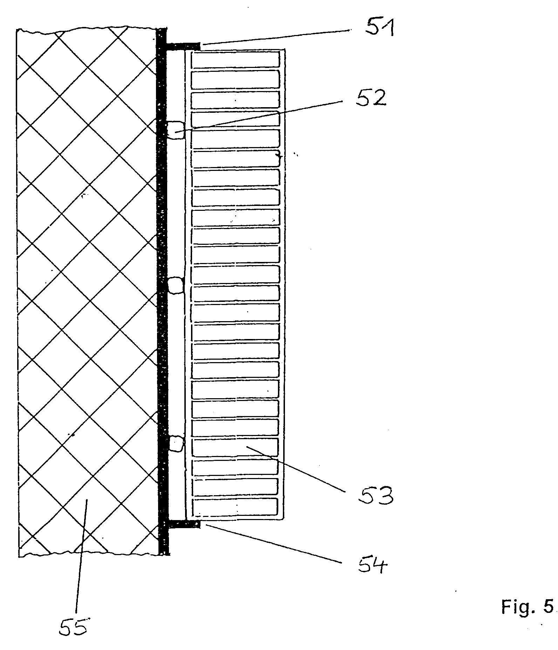

Um eine Überhitzung der in die Gebäudefassade integrierten Hohlkörperelemente durch besonders intensive Sonneneinstrahlung, z.B. im Sommer, zu vermeiden, können diese mittels Abstandhaltern angebracht werden (Figur 5).

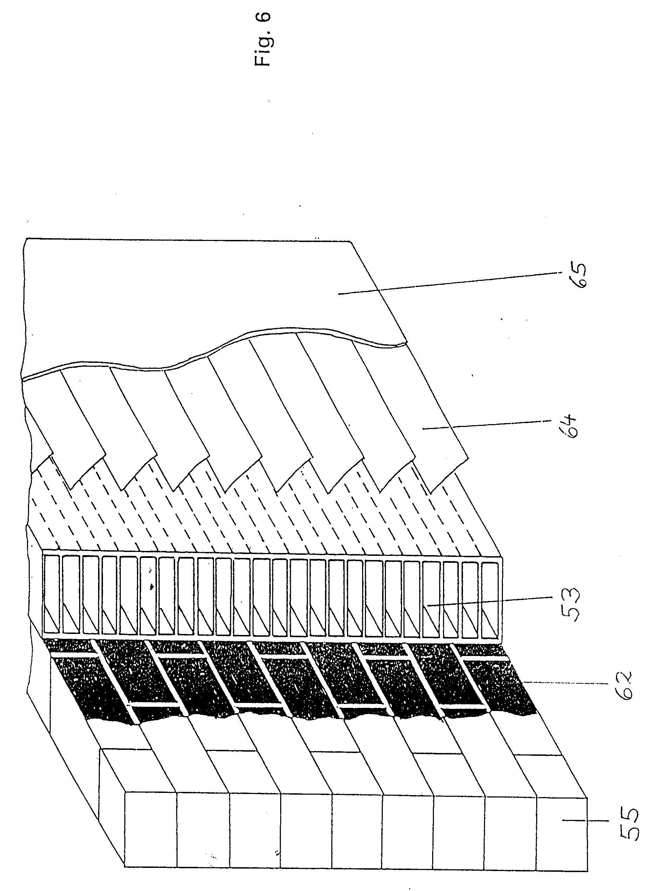

Als Mittel zum Abschatten können Jalousien in die Gebäudefassade integriert sein (Figur 6). Denkbar ist auch eine Selbstabschattung der Hohlkörper durch die Verwendung von außen aufgebrachten Oberflächenschichten, die mit zunehmender Temperatur reversibel an Transparenz verlieren und somit selbstabschattend sind. Als Beispiel seien Mischungen von PMMA und Glasfibern genannt. (LIN, H., DAY, D.E. und STOFFER (1992): *Optical and Mechanical Properties of Optically Transparent Poly(methyl methacrylate) Composites*. Polymer Engineering and Science, Vol. 32, No. 5, S. 344 - 350).

Die hinter den Hohlkörpern liegende Hauswand kann zur besseren Aufnahme der Wärme schwarz oder selektiv strahlungsabsorbierend gestaltet werden. Ebenso können flüssigkeitsführende Systeme hinter den Hohlkörper angeordnet werden, die die abgegebene Wärme aufnehmen und zur weiteren Verwendung z.B. als Heizenergie abtransportieren.

### BEISPIEL

Mit Hilfe eines erfindungsgemäßen Extrusionswerkzeuges und einer nachfolgenden Vakuumkalibrierung wird eine Stegdoppelplatte aus einer handelsüblichen Polymethylmethacrylat-Formmasse kontinierlich durch Extrusion hergestellt (Die Buchstabenbezeichnungen der Abmessungen und der Winkel α werden folgend analog zu Figur 1 verwendet).

Die Innenhöhe der noch nicht verschlossen Hohlkammern (a) beträgt 10 mm, ihre Innenlänge (b) beträgt 200 mm. Der Winkel α der Stege zu den Wänden beträgt 90° Die Plattendicke (c) beträgt 203 mm (Wandstärke je 1,5 mm). Die Gesamtbreite (d) wird durch Schneiden des durch Extrusion kontinuierlich hergestellten Formkörpers auf 1000 mm festgelegt. Die Höhe der Platte (e) beträgt ca. 800 mm. Die Stärke der einzelnen Stege (f) beträgt ca. 0,5 mm.

Nun wird der Hohlkörper durch Verkleben mit zwei planen PMMA-Platten mit den Abmessungen 203 mm x 800 mm (entsprechend den Maßen des Hohlkörpers) x 1,5 mm (Dicke der planen PMMA-Platten) jeweils an den offenen Enden durch Verkleben verschlossen. Mehrere verschlossene, erfindungsgemäße Hohlkörper werden nun an einer Gebäudefassade mittels geeigneter Rahmen (z.B. aus Aluminium) direkt an der Hauswand so befestigt, daß die Hohlkammern waagerecht verlaufen. Eine andere Anbringungsmöglichkeit sieht vor, daß die Hohlkörper in Aussparungen konventioneller Hauswandisolierungen (Dämmplatten und Verputz) am Mauerwerk befestigt werden.

### Bezugszeichenliste für die Figuren 5 und 6

- 51: = Abdichtung oben
- 52: = Abstandshalter
- 53: = Wärmedämmplatte
- 54: = Abdichtung unten
- 55: = Mauer
- 62: = Schwarzer Anstrich
- 64: = Jalousie
- 65: = Deckscheibe

## Patentansprüche

1. Transparenter, wärmedämmender, geschlossener Hohlkörper aus extrudierbarem Kunststoff als Bestandteil einer Gebäudefassade, enthaltend mindestens zwei parallel zueinander stehende Platten, die durch parallel zueinander, zwischen den Platten angeordnete Stege miteinander verbunden sind, wodurch Hohlkammern gebildet werden, dadurch gekennzeichnet, daß die Stege an der Gebäudefassade waagerecht verlaufen und daß die Ausdehnung der Hohlkammern in senkrechter Richtung (a) höchstens ein Viertel der Ausdehnung in der Breite (b) beträgt.

2. Hohlkörper nach Anspruch 1, dadurch gekennzeichnet, daß das Verhältnis von Breite (b) zur mittleren Höhe (a) des Hohlkammerquerschnitts, b : a, 5 bis 200 beträgt.

3. Hohlkörper nach Anspruch 1 oder 2, dadurch gekennzeichnet, daß die Hohlkammern im Querschnitt die geometrischen Formen eines langgestreckten Rechtecks, Trapezes, Parallelogramms oder Dreiecks aufweisen.

4. Hohlkörper nach Anspruch 3, dadurch gekennzeichnet, daß die Stege der Hohlkammern zwischen den Platten in einem Winkel von 45° bis 135° angeordnet sind.

5. Hohlkörper nach einem oder mehreren der Ansprüche 1 bis 4, dadurch gekennzeichnet, daß die Anzahl der übereinander angeordneten Hohlkammern 10 bis 500 beträgt.

6. Hohlkörper nach einem oder mehreren der Ansprüche 1 bis 5, dadurch gekennzeichnet daß die Plattendicke (c) 50 mm bis 500 mm, vorzugsweise 100 bis 300 mm, beträgt.

7. Hohlkörper nach einem oder mehreren der Ansprüche 1 bis 6, dadurch gekennzeichnet, daß die Gesamtbreite (d) zwischen 500 und 3000 mm liegt.

8. Hohlkörper nach einem oder mehreren der Ansprüche 1 bis 7, dadurch gekennzeichnet, daß seine Höhe (e) 300 mm bis 2000 mm beträgt

9. Einstückig extrudierte Hohlkammerplatte aus transparentem Kunstoff zur Herstellung von Hohlkörpern gemäß einem oder mehreren der Ansprüche 1 bis 8, enthaltend zwei parallel zueinander stehende Platten, die durch parallele Stege einstückig verbunden sind, wodurch Hohlkammern gebildet werden, dadurch gekennzeichnet, daß die Hohlkammerplatte eine Dicke (c) von 50 mm bis 500 mm und die Hohlkammern ein Verhältnis von innerer Breite (b) zu mittlerer Höhe (a) b : a = 5 - 200 haben.

10. Hohlkörper nach einem oder mehreren der Ansprüche 1 - 9, dadurch gekennzeichnet, daß er aus Polymethylmethacrylat, Polycarbonat, Polystyrol oder aus Polyvinylchlorid besteht.

11. Hohlkörper nach einem oder mehreren der Ansprüche 1 - 10, dadurch gekennzeichnet, daß er mit einer wasserspreitenden Beschichtung versehen ist.

12. Gebäudefassade, enthaltend einen oder mehrere Hohlkörper nach einem oder mehreren der Ansprüche 1 bis 11, dadurch gekennzeichnet, daß sie Mittel zum reversiblen Abschatten des oder der Hohlkörper aufweist.

13. Gebäudefassade nach Anspruch 12, dadurch gekennzeichnet, daß die Mittel zum reversiblen Abschatten der Gebäudefassade aus Mischschichten aus PMMA und Glasfibermaterial bestehen.

14. Gebäudefassade enthaltend einen oder mehrere Hohlkörper nach einem oder mehreren der Ansprüche 1 bis 11, dadurch gekennzeichnet, daß die Wand hinter den Hohlkörpern schwarz oder selektiv strahlungsabsorbierend ist.

15. Gebäudefassade enthaltend einen oder mehrere Hohlkörper nach einem oder mehreren der Ansprüche 1 bis 11, dadurch gekennzeichnet, daß die Hohlkörper mittels Abstandhaltern an der Wand befestigt sind

16. Stegplatten-Extrusionswerkzeug zur Herstellung der unverschlossenen Stegplattenkomponente eines Hohlkörpers aus Kunststoff nach einem oder mehreren der Ansprüche 1 bis 11, enthaltend Lippen (31,32) und dazwischen in Abständen angeordnete Kernstücke (33) mit Schlitzen (34) zur Bildung von Stegen, dadurch gekennzeichnet, daß an der Basis der Schlitze Massekanäle (35) zur Speisung der Stege in das Kernstück eingeschnitten sind.

17. Stegplatten-Extrusionswerkzeug nach Anspruch 16, dadurch gekennzeichnet, daß sich die Massekanäle zur Speisung der Stege nach innen zunehmend verjüngen.

18. Stegplatten-Extrusionswerkzeug nach Anspruch 16 oder 17, dadurch gekennzeichnet, daß die Schlitze (34) zur Ausbildung der Stege oben breiter ausgeführt sind als unten.

19. Verfahren zur Wärmedämmung und Wärmeerzeugung bei Gebäuden mittels eines oder mehrerer an der Gebäudefassade angebrachter Hohlkörper nach einem oder mehreren der Ansprüche 1 bis 15, dadurch gekennzeichnet, daß in Wärmeenergie umgewandelte Strahlungsenergie an das Gebäude abgegeben wird und zugleich der Austritt von Wärme in die Umgebung weitgehend vermieden wird.

20. Verfahren nach Anspruch 19, dadurch gekennzeichnet, daß die Wärmeenergie mittels eines flüssigkeitsdurchströmten Systems abgeführt und verteilt wird.
